Europäisches Patentamt

European Patent Office

Office européen des brevets

(19)

(11) Numéro de publication: **0 210 117 B1**

# FASCICULE DE BREVET EUROPEEN

(45) Date de publication de fascicule du brevet:
**27.02.91**

(51) Int. Cl.5: **G06K 15/16, B07C 3/00,**
**G06K 13/04**

(21) Numéro de dépôt: **86440056.9**

(22) Date de dépôt: **07.07.86**

Le dossier contient des informations techniques présentées postérieurement au dépôt de la demande et ne figurant pas dans le présent fascicule.

(54) **Périphérique de sortie d'ordinateur à tri et émargeage automatiques.**

(30) Priorité: **23.07.85 FR 8511357**

(43) Date de publication de la demande:
**28.01.87 Bulletin 87/05**

(45) Mention de la délivrance du brevet:
**27.02.91 Bulletin 91/09**

(84) Etats contractants désignés:
**AT BE CH DE GB IT LI LU NL SE**

(56) Documents cités:
**EP-A- 0 118 730**
**DE-A- 3 032 517**
**FR-A- 2 256 100**
**FR-A- 2 315 131**
**US-A- 3 968 350**

(73) Titulaire: **Remy, Hubert**
**"Les Sorbiers"**
**F-88700 Rambervillers(FR)**

(72) Inventeur: **Remy, Hubert**
**"Les Sorbiers"**
**F-88700 Rambervillers(FR)**

(74) Mandataire: **Aubertin, François**
**Cabinet Lepage & Aubertin Innovations et**
**Prestations 4, rue de Haguenau**
**F-67000 Strasbourg(FR)**

## Description

L'invention concerne un périphérique d'ordinateur pour le traitement de documents Informatiques comportant une imprimante alimentée en papier continu mû par un entraînement à picots et passant devant la tête d'impression de ladite imprimante, des cellules de lecture optique des symboles apparaissant sur les bandes de rive du papier connectées en entrée à une interface électronique et disposées directement entre la sortie de l'imprimante et un dispositif émargeur d'une part, coupant les bandes de rive et, d'autre part, découpant transversalement le papier en une succession de feuilles imprimées, une table de lecture permettant d'aiguiller les différentes feuilles imprimées vers une succession d'éléments de tri présentant des moyens moteurs asservis par l'interface électronique.

Dans l'état actuel de la technique, les ordinateurs sont fréquemment reliés à des imprimantes, auxquelles ils fournissent des données destinées à être imprimées sur un listing. Or, les données à imprimer pouvant être de nature et de destinataire extrêmement variables, il est souvent nécessaire de couper après coup le listing sortant de l'imprimante afin d'en séparer les différentes feuilles imprimées et de les trier.

Afin de faciliter ces opérations, le listing comporte le plus souvent une feuille centrale bordée de deux bandes de rive, qui peuvent être séparées de la feuille centrale par arrachage le long d'une ligne pointillée préexistante et de perforations transversales aidant au pliage et à la séparation des documents entre-eux.

On connaît, par le document US-A-3.968.350, un dispositif permettant l'étiquetage automatique d'articles ou d'enveloppes, à partir d'un jeu d'étiquettes imprimées disposées selon une pluralité de rangées et de colonnes. Ce périphérique d'ordinateur comporte une imprimante alimentée en papier continu mû par un entraînement à picots et passant devant la tête d'impression de ladite imprimante, des cellules de lecture optique des symboles apparaissant sur les bandes de rive du papier connectées en entrée à une interface électronique et disposées directement entre la sortie de l'imprimante et un dispositif émargeur, d'une part, coupant les bandes de rive et, d'autre part, individualisant les étiquettes, une table de lecture permettant d'aiguiller les différentes étiquettes vers une succession d'éléments de tri présentant des moyens moteurs asservis par l'interface électronique.

Toutefois, l'utilisation de ce dispositif n'est envisagée que pour des étiquettes collées sur des enveloppes.

Par ailleurs, on connaît, par le document DE-A-3.032.5l7, un dispositif de tri de photos en provenance de films. Ce dernier se déplace devant un élément de contrôle vérifiant la qualité de la photo. Cet élément de contrôle actionne un couteau qui sépare la photo individuelle du film. La photo individuelle est prise en charge par un transporteur alimentant un chariot comportant un ensemble de casiers. Chaque casier est obturé par un volet. Après le passage de la dernière photo, un second élément de contrôle décèle la venue d'un nouveau film. Le premier élément de contrôle actionne le volet qui obture l'entrée du premier casier. Parallèlement, cet élément de contrôle sollicite une imprimante qui imprime sur une fiche de contrôle le nombre de photos stockées dans le premier casier en provenance du premier film. Les photos du second film sont dirigées vers un second groupe de casiers. Pour le troisième film, les photos sont dirigées vers un troisième groupe de casiers. Lorsque les trois groupes sont occupés, par l'intermédiaire d'un dispositif moteur, l'ensemble des trois groupes de casiers sont ripés pour l'amenée d'un nouveau groupe de casiers auprès du transporteur.

Selon un autre mode de réalisation, le chariot est remplacé par un carrousel qui présente, par rotation, les différents casiers devant le transporteur.

Toutefois, un tel carrousel est inadapté pour le tri de documents utilisés en informatique car les dimensions courantes solliciteraient un carrousel dont le diamètre serait très important et ne pourrait pas être incorporé dans une ligne informatique.

En outre, on connaît, par le document FR-A-2.256.100, un appareil et un procédé de collationnement en partie de copies de documents en provenance d'une copieuse. Cet appareil comporte un certain nombre de trémies dont l'ouverture est munie d'une porte mobile autour d'un axe. Au commencement de l'utilisation, les trémies sont fermées, sauf la dernière vers laquelle est dirigée la première photocopie. Lorsque la feuille pénètre dans cette trémie, elle occulte momentanément la lumière émise par une cellule photo-électrique qui émet un signal d'impulsion à une centrale logique de commande de l'appareil. Cette centrale logique actionne, à son tour, l'électroaimant de la seconde trémie pour diriger la photocopie suivante dans cette seconde trémie et ainsi de suite.

Toutefois, l'ouverture de trémies se fait seulement selon une succession et cette succession est commandée par le passage successif des photocopies. La présente invention a pour but de remédier à ces inconvénients et est surtout adapté à des documents mis sous enveloppe

L'invention est définie dans la revendictation 1. Les avantages obtenus grâce à cette invention consistent essentiellement en ce que le périmètre d'ordinateur est en mesure de se charger automatiquement de toutes les opérations nécessaires à partir de l'impression des informations fournies par l'ordinateur pour le tri automatique des documents et leur acheminement vers d'autres dispositifs connus en soi du fait que l'ordinateur garde l'information de cette destination en mémoire jusqu'au parfait aiguillage et la venue de la feuille suivante.

L'invention est exposée ci-après plus en détail à l'aide de dessins représentant seulement un mode d'exécution.

La figure 1 représente, en vue en élévation et en coupe, un mode de réalisation du périphérique d'ordinateur conforme à l'invention.

La figure 2 représente, en vue en élévation et en coupe, la station de retournement de feuilles du périphérique conforme à l'invention.

La figure 3 représente une vue en plan selon une coupe III-III du dispositif de la figure 2.

La figure 4 représente, en vue en perspective, un autre mode de réalisation de la station de retournement de feuilles du périphérique d'ordinateur conforme à l'invention.

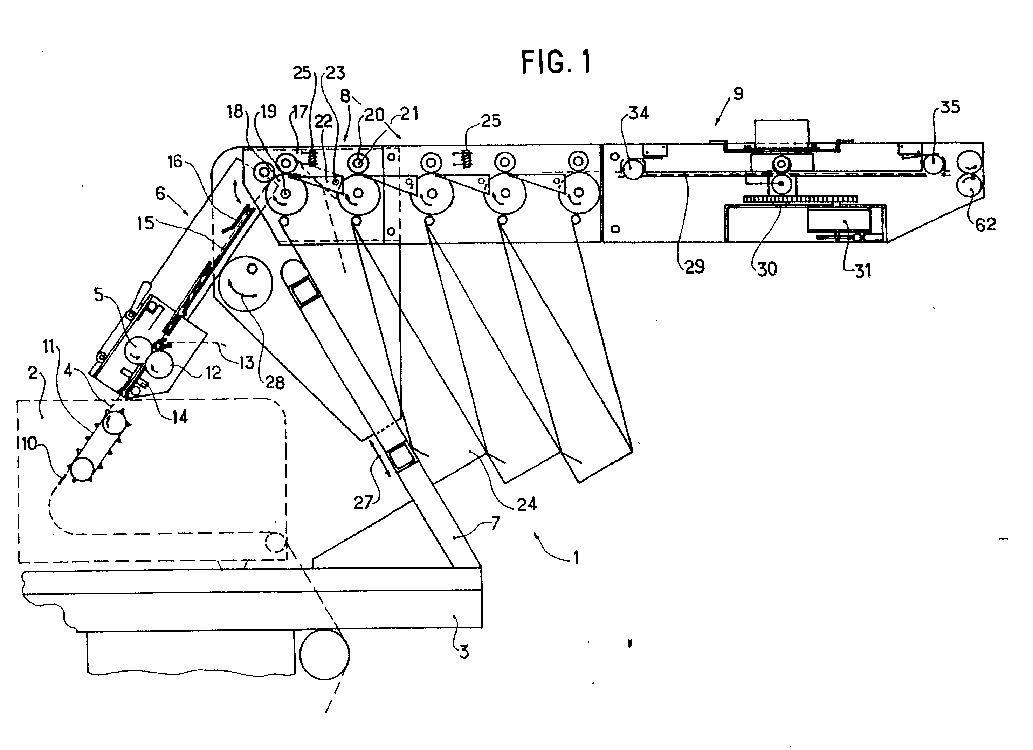

On se réfère à la figure 1.

Le périphérique d'ordinateur 1 se compose principalement d'une imprimante 2 disposée sur un support ou une table 3, et suivie au niveau de la sortie du papier imprimé 4, d'un dispositif émargeur 5 qui débouche sur une table de lecture 6 articulée sur un bâti 7, cette table de lecture 6 étant elle-même suivie par une succession d'éléments de tri 8, puis par une station 9 de retournement et/ou d'aiguillage des documents.

Bien entendu, l'imprimante 2 et notamment sa tête d'impression 10 et son entraînement à picots 11 peuvent être entourés par un capot insonorisant connu en soi.

Du fait que le document imprimé 4 est constitué par une bande centrale solidaire de deux bandes latérales pourvues d'une succession de trous permettant la préhension par les picots de l'entraînement à picots 11, le dispositif émargeur 5 est de préférence constitué par l'émargeur décrit dans le brevet français n° 2.556.654. Ce dispositif émargeur 5 est donc pourvu de couteaux rotatifs 12 permettant de couper, puis de séparer les bandes de rive 13 de la bande centrale du document 4.

Le périphérique d'ordinateur est pourvu, en outre, de cellules de lecture optique 14 destinées à la lecture de symboles graphiques imprimés par l'ordinateur sur les bandes de rive 13 afin de permettre l'aiguillage ultérieur des différents documents vers leur station de traitement respective. Comme les bandes de rive 13 sont séparées de la bande centrale du document 4 par le dispositif émargeur 5, lesdites cellules de lecture optique 14 sont disposées directement entre la sortie de l'imprimante 2 et le dispositif émargeur 5.

En sortie du dispositif émargeur 5, le papier 4 imprimé se présente sous la forme d'une bande centrale imprimée et dépourvue des bandes de rive perforées 13. Par conséquent, le dispositif émargeur 5 étant pourvu, selon le brevet précité, de moyens destinés à procéder à une découpe transversale du papier 4, ce dernier se présente sur la table de lecture 6 sous forme d'une succession de feuilles imprimées 15. La table de lecture 6 comporte, de préférence, un déflecteur 16 permettant d'aiguiller les différentes feuilles ou liasses de feuilles 15 vers les éléments de tri 8.

La table de lecture 6 est suivie par un ou plusieurs éléments de tri 8, auxquels elle fournit les feuilles 15 au-fur-et-à-mesure de leur arrivée.

Les éléments de tri 8 sont constitués par un châssis 17 sur lequel sont montés des galets 18 cylindriques, mobiles autour d'un axe horizontal 19, et entraînés par des moteurs (non représentés). Ces galets d'entraînement 18 coopèrent avec des galets de guidage 20 tangents aux galets d'entraînement 18, et libres en rotation autour d'un axe 21. De cette façon, les feuilles 15 qui arrivent au niveau des éléments de tri 8 sont entraînées par les galets 18 avec lesquels elles sont maintenues en contact par l'intermédiaire des galets de guidage 20.

Afin que les éléments de tri 8 puissent remplir leur fonction, ils sont pourvus de guides 22 disposés entre deux galets d'entraînement 18 successifs, et mobiles autour d'un axe de rotation 23. Les éléments de tri 8 sont pourvus, en outre, d'un certain nombre de casiers 24 permettant de recevoir les feuilles 15 triées, chacun des casiers 24 regroupant les feuilles 15 destinées à une même adresse ou utilisation.

Lors du fonctionnement du périphérique d'ordinateur conforme à i'invention, les guides 22, mobiles autour de leur axe de rotation 23, peuvent se trouver en position relevée ou en position abaissée. Ainsi, lorsqu'un guide 22 se trouve en position relevée, il fait office d'élément de guidage permettant de dévier la feuille 15 dans le casier 24 correspondant. A l'inverse, lorsque le guide 22 est en position abaissée, il fait office de support pour la feuille 15 entraînée par un galet d'entraînement 18, et lui permet d'atteindre le prochain galet d'entraînement 18 de l'élément de tri 8.

Bien entendu, pour que l'élément de tri 8 puisse fonctionner, il est nécessaire qu'il comporte des organes de commande destinés à actionner les guides 22 en fonction de la destination de la feuille 15 qui arrive. A cet effet, les éléments de tri 8 sont pourvus d'organes de commande constitués par exemple par des électroaimants 25 agissant sur les guides 22 qui sont, dans ce cas, métalliques, et permettant de les mettre en position abaissée ou en position relevée.

Cependant, il est évident que les guides 22 doivent se lever et s'abaisser sélectivement et à des instants déterminés, en fonction de la destination de la feuille 15, qui doit être dirigée vers l'un des casiers 24, ou vers la station 9 de retournement et/ou d'aiguillage.

Le séquencement de ces opérations est obtenu par l'intermédiaire des cellules de lecture optique 14, connues en soi, et qui lisent un code imprimé par l'ordinateur sur les bandes de rive 13 non encore détachées du papier imprimé 4. De ce fait, il est nécessaire que lesdites cellules de lecture optique 14 soient connectées en entrée à une interface électronique (non représentée) à laquelle elles transmettent les codes inscrits sur les bandes de rive 13. Cette interface électronique est, elle-même, reliée en sortie aux électroaimants 25, qu'elle commande afin que les guides 22 soient actionnés selon une séquence correspondant aux codes lus sur les bandes de rive 13.

Bien entendu, en fonction du nombre de possibilités de tri que doit posséder le périphérique d'ordinateur la succession des éléments de tri 8, des galets d'entraînement 18 et des casiers 24 est entièrement modulable, tous ces éléments étant amovibles pour être, selon le cas, rajoutés ou supprimés. En outre, le bâti 7 du périphérique d'ordinateur comporte des réglages en hauteur 27 et en inclinaison 28, de façon à permettre le meilleur ajustement de l'encombrement du périphérique d'ordinateur 1 en fonction des besoins de l'utilisateur.

Le périphérique de l'ordinateur 1 comporte à la suite d'un ou de plusieurs éléments de tri 8, une station 9 de retournement et/ou d'aiguillage des feuilles 15 qui n'ont pas été préalablement déviées vers l'un des casiers amovibles 24. Cette station 9 de retournement et/ou d'aiguillage se compose principalement d'une gaine $24_1$ sensiblement rectangulaire dans laquelle la feuille 15 à retourner s'engage. Puis, cette gaine $24_1$ est retournée de cent quatre vingts degrés ou déplacée d'une autre valeur angulaire autour d'un axe vertical 30 par des moyens moteurs 31 également asservis par l'interface électronique.

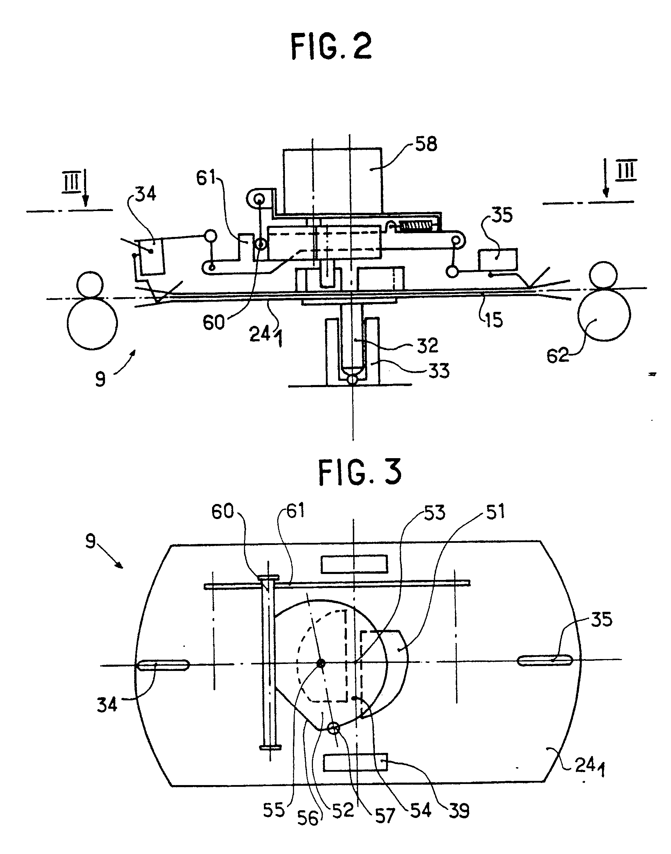

On se réfère aux figures 2, 3 et 4.

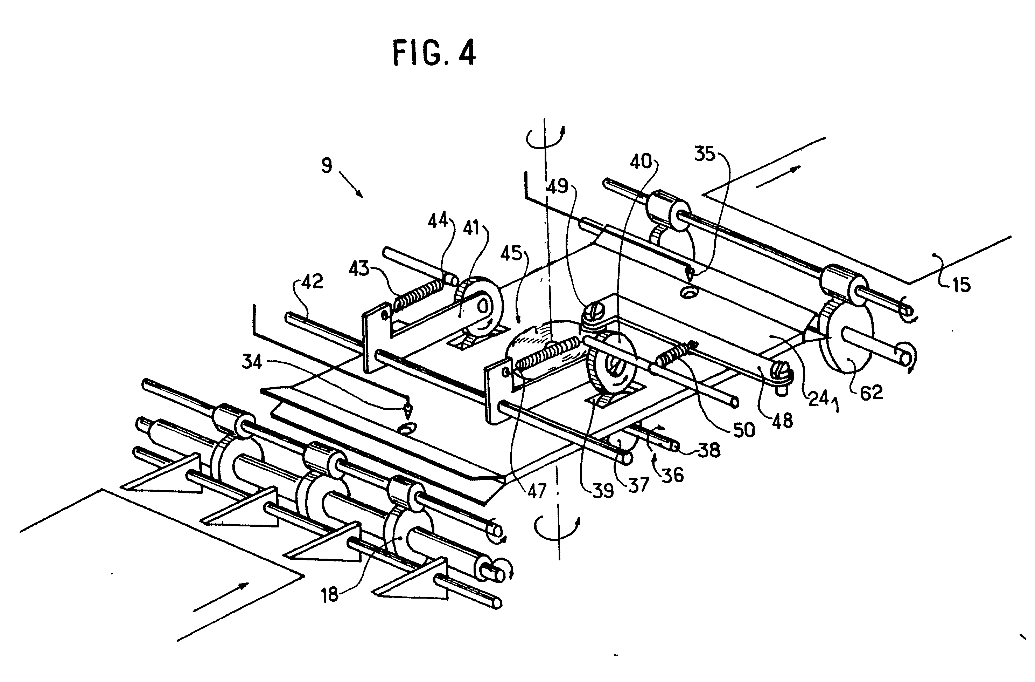

Afin que la gaine $24_1$ contenant une feuille 15 ou une liasse de feuilles puisse tourner selon des fractions de tours, elle est solidaire d'un axe 32 vertical mobile en rotation dans un palier 33. De plus, il est nécessaire que la feuille 15 soit entièrement positionnée dans la gaine $24_1$ lors de la rotation de celle-ci. A cet effet, la gaine $24_1$ est pourvue d'un capteur de présence d'entrée 34 et d'un capteur de présence de sortie 35. Ces capteurs 34 et 35 peuvent être de tout type adéquat, notamment des capteurs électromécaniques (figure 2) ou des capteurs optiques (figure 4).

La station 9 de retournement et/ou d'aiguillage est également pourvue de moyens d'entraînement 36 des feuilles 15 afin de permettre leur mouvement dans la gaine $24_1$, lorsqu'elles sont hors de portée des galets d'entraînement 18 des éléments de tri 8 situés en amont de la station de retournement 9. Selon une réalisation préférentielle de l'invention, les moyens d'entraînement 36 des feuilles 15 sont constitués par des galets moteurs 37 solidaires d'un axe d'entraînement 38 et coopérant, à travers des longitudinales 39 aménagées dans la gaine $24_1$, avec des galets fous 40. Ces derniers sont nécessairement escamotables, afin de ne pas entraver le mouvement des feuilles 15 lors de leur retournement.

Les galets fous 40 sont mobiles en rotation par rapport à des bras de support 41 solidaires d'un axe 42. Ainsi, pour escamoter les galets fous 40 vers le haut lors de la rotation de la gaine $24_1$, il suffit de provoquer la rotation correspondante de l'axe 42 par un moyen approprié, les bras de support 41 pourvus des galets fous 40 étant automatiquement ramenés en position basse à la fin de la rotation de la gaine $24_1$ par des ressorts de rappel 43 attachés, d'une part, auxdits bras de support 41 et, d'autre part, à un point 44 quelconque solidaire du bâti de la machine.

Selon l'invention, le calage angulaire de la gaine $24_1$ peut être effectué de diverses manières. Dans le cas le plus simple où la station 9 est utilisée uniquement pour le retournement de cent quatre vingts degrés des feuilles 15, le calage angulaire peut être aisément obtenu par l'intermédiaire d'une came 45(figure 4) dont le profil permet de positionner la gaine $24_1$ dans des positions d'équilibre successives correspondant à des rotations de cent quatre vingts degrés. Par conséquent, la came 45 peut être costituée par une came crantée comportant sur sa périphérie deux encoches 47 situées à un intervalle angulaire de cent quatre vingts degrés, et coopérant avec un bras 48 pourvu d'un galet 49 qui, s'engageant successivement dans l'une des encoches 47 sous l'action d'un ressort 50, définit les positions d'équilibre de la gaine $24_1$.

Bien entendu, dans ce mode de réalisation de la station de retournement 9, les moyens moteurs 31 (invisibles sur la figure 4) ne fonctionnent que par intermittence et leur sens de rotation est inversé (ou non) selon la direction prise par la feuille 15 après retournement, et sont par exemple constitués par un motoréducteur asservi par l'interface électronique, et entraînant en rotation la came crantée solidaire de la gaine $24_1$.

Selon un autre mode de réalisation de la station de retournement 9 (figures 2 et 3), le calage angulaire de la gaine $24_1$ est assuré par deux cames 51 et 52. La came 51, solidaire de la gaine $24_1$, est mobile autour d'un axe vertical 53 et comporte une rainure 54. La came 52 est mobile autour d'un axe vertical 55 et est pourvue sur sa périphérie de méplats 56 et d'un galet 57. Lors du mouvement de la came 52 entraînée par un motoréducteur 58, le galet 57 pénètre dans la rainure 54 de la came inférieure 51. il en résulte la rotation de ladite came 51 ainsi que de la gaine $24_1$ dont elle est solidaire. A la fin de chaque retournement de la gaine $24_1$ , correspondant à une rotation de cent quatre vingts degrés, le galet 57 quitte la fente 54 de la came 51, ce qui correspond à l'une des deux positions d'équilibre de la gaine $24_1$.

Il est à noter que dans le cas où les capteurs de présence 34 et 35 sont du type électromécanique (figures 2 et 3), il est nécessaire de relever ces capteurs pour permettre le passage de la feuille lorsque cette dernière entre dans la gaine $24_1$ ou lorsqu'elle la quitte. A cet effet, la station de retournement 9 peut être pourvue d'une barre 60 coopérant avec les méplats 56 de la came 52. Cette barre 60 actionne un levier 61 agissant sur les microcontacteurs ou détecteurs de présence 34 et 35, de façon à les relever ou les abaisser en fonction de la position instantanée de la came 52. Par ailleurs, les détecteurs de présence 34 et 35 ou microcontacteurs sont connectés aux circuits de commande des différents moyens moteurs permettant d'entraîner en rotation la gaine $24_1$. l'axe 38 portant les galets 37, ainsi que les galets de sortie 62. Bien entendu, le profil de came le plus adéquat pour les cames 51 et 52 est aisément déterminé par l'Homme de Métier, afin d'assurer le séquencement correct de mise en route des moyens moteurs (non représentés) par les détecteurs de présence 34 et 35.

De ce fait, lors du fonctionnement de la station de retournement 9,la détection d'une feuille 15 par le détecteur de présence 34 provoque la mise en route du moteur entraînant les galets 37 afin que la feuille 15 puisse se positionner toute entière dans la gaine 241. Lorsque cette feuille 15 arrive au niveau du détecteur de présence 35, les galets d'entraînement 37 sont arrêtés, et le motoréducteur entraînant la gaine $24_1$ en rotation est mis en route afin d'obtenir le retournement de la feuille 15. A la fin dudit retournement, le détecteur de sortie 35 est à nouveau actionné par l'intermédiaire de la came 52, de la barre 60 et du levier 61, ce qui correspond à la remise en route du moteur actionnant les galets d'entraînement 37, ainsi que la mise en mouvement des galets de sortie 62 permettant d'entraîner la feuille 15 en dehors de la gaine $24_1$ pour utilisation. Puis, la rotation de la came 52 se poursuivant, le levier 60 se pose dans le creux de came, faisant ainsi reprendre aux détecteurs de présence 34 et 35 leur position initiale, et arrêtant le motoréducteur 58 entraînant la came 52, jusqu'au démarrage d'un nouveau cycle de retournement.

Il est à noter que le moteur d'entraînement de l'axe 38 (figure 4) est, dans le cas d'une station de retournement 9, un moteur à double sens, et qu'à chaque demi-tour de la gaine $24_1$ , il y a nécessairement inversion du sens de rotation dudit moteur, par un simple inverseur commandé par ladite gaine $24_1$.

Bien entendu, le fonctionnement décrit précédemment s'applique aux cas d'une station de retournement 9 telle que représentée aux figures 2, 3 et 4. Cependant, selon un autre mode de réalisation de l'invention, le périphérique d'ordinateur 1 peut comporter une station d'aiguillage remplaçant la simple station de retournement 9, et permettant de faire subir à la gaine $24_1$ des rotations selon des valeurs angulaires déterminées par l'interface électronique, en fonction des adresses lues sur les bandes de rive 13 des feuilles 15 par les cellules de lecture optique 14, tel que décrit précédemment. A cet effet, la station d'aiguillage 9 doit être pourvue de moyens moteurs asservis par l'interface électronique, et constitués de préférence par un moteur pas à pas permettant d'assurer la rotation de la gaine $24_1$ selon les valeurs angulaires voulues.

Ce type d'extrapolation de la station de retournement 9 permet de positionner en sortie du périphérique d'ordinateur 1, plusieurs dispositifs utilisant les feuilles 15, tels que des lignes de façonnage, de pliage ou de mise sous enveloppe des feuilles 15, ces différents dispositifs utilisateurs étant alimentés à tour de rôle en fonction de l'adresse de la feuille 15 en cours de traitement dans le périphérique d'ordinateur 1.

Bien entendu, afin d'éviter le bourrage des feuilles à l'intérieur du périphérique d'ordinateur 1, il est judicieux d'animer les galets d'entraînement 18 (figure 1) d'une vitesse supérieure à la vitesse maximale à laquelle les feuilles 15 peuvent sortir de l'imprimante 2. De plus, afin que chaque feuille 15 soit aiguillée correctement dans les casiers et/ou dans la station d'aiguillage ou de retournement 9, il peut s'avérer nécessaire d'introduire une temporisation afin de tenir compte de la durée du trajet des feuilles 15 entre la lecture de leur adresse par les cellules des lectures optiques 14, et leur arrivée au niveau des casiers et/ou de la station de retournement et/ou d'aiguillage 9.

Le périphérique d'ordinateur 1 décrit précédemment présente ainsi de nombreuses possibilités de fonctionnement, compte tenu de sa construction sous forme d'une combinaison de plusieurs éléments modulaires. Il permet d'automatiser entièrement le "circuit de papier" entre le départ de l'imprimante d'ordinateur et les divers destinataires ou utilisateurs. Ce mode de tri ou de mise sous enveloppe bénéficie d'un avantage considérable du fait qu'il est piloté par l'ordinateur, ce qui permet des montages très complexes. Ainsi, à titre d'exemple non limitatif, le périphérique d'ordinateur est surtout adapté aux relevés, extraits de comptes bancaires où chaque destinataire peut bénéficier d'un ou de plusieurs documents mis sous enveloppe.

## Revendications

1. Périphérique d'ordinateur pour le traitement de documents informatiques comportant une imprimante (2) alimentée en papier (4) continu mû par un entraînement à picots (11) et passant devant la tête d'impression (10) de ladite imprimante (2). des cellules de lecture optique (14) des symboles apparaissant sur les bandes de rive (13) du papier (4) les cellules étant connectées en entrée à une interface électronique et étant disposées directement entre la sortie de l'imprimante (2) et un dispositif émargeur (5), d'une part, coupant les bandes de rive (13) et, d'autre part, découpant transversalement le papier (4) en une succession de feuilles imprimées (15), une table de lecture (6) permettant d'aiguiller les différentes feuilles imprimées (15) vers une succession d'éléments de tri (8) présentant des moyens moteurs (25) asservis par l'interface électronique, caractérisé en ce qu'il comporte une station de retournement (9) présentant des moyens moteurs asservis par l'interface électronique et constitués par un moteur pas à pas assurant la rotation d'une gaine (24₁) autour d'un axe vertical (30) et actionnée par fraction de tour par l'intermédiaire d'une came (45) selon des angles déterminés par l'interface électronique en fonction des adresses lues sur les bandes de rive (13) des feuilles imprimées (15) par les cellules de lecture optique (14).

2. Périphérique d'ordinateur selon la revendication 1, caractérisé en ce que la station (9) de retournement et/ou d'aiguillage des feuilles imprimées (15) comporte des galets fous (40) escamotables et mobiles en rotation par rapport à des bras de support (41) solidaires d'un axe (42) servant à escamoter les galets fous (40) vers le haut, lors de la rotation de la gaine (24₁), lesdits bras de support (41) pourvus des galets fous (40) étant ramenés en position basse par des ressorts de rappel (43) à la fin du mouvement de la gaine (24₁) pour coopérer, à travers des longitudinales (39) aménagées dans la gaine (24₁) avec des galets d'entraînement (18) solidaires d'un axe d'entraînement (38) pour l'entraînement des feuilles imprimées (15).

3. Périphérique d'ordinateur selon la revendication 1, caractérisé en ce que la came (45) est constituée par une superposition de deux cames (51) et (52), la came (52) étant pourvue, sur sa périphérie, de méplats (56) et d'un galet (57), et la came (51) étant pourvue d'une rainure (54) coopérant avec le galet (57) de la came (52).

## Claims

1. Computer output peripheral device for the processing of data-processing documents, comprising a printer (2) with continuous-paper (4) feeding driven by a sprocket drive (11) and passing in front of the printing head (10) of said printer (2), cells (14) for optically scanning the symbols appearing on the margin strips (13) of the paper (4), the cells being connected in input to an electronic interface and being arranged directly between the output of the printer (2) and a trimming device (5), on the one hand, cutting the margin strips (13) and, on the other hand, transversally cutting the paper (4) into a series of printed sheets (15), a scanning board (6) allowing to switch the various printed sheets (15) towards a series of sorting elements (8) having driving means (25) controlled by the electronic interface, characterized in that it comprises a reversing station (9) having driving means controlled by the electronical interface and comprised of a stepping motor ensuring the rotation of a duct (24₁) about a vertical spindle (30) and actuated by fractions of revolution by means of a cam (45), by angles determined by the electronic interface according to the addresses read from the margin strips (13) of the sheets (15) by the optical scanning cells (14).

2. Computer output peripheral device according to claim 1, characterized in that the reversing and/or switching station (9) for the printed sheets (15) comprises loose rollers (40) which are retractable and movable in rotation with respect to supporting arms (41) integral with a spindle (42) for retracting the loose rollers (40) upwardly during the rotation of the duct (24₁), said supporting arms (41) provided with the loose rollers (40) being brought back into lower position, at the end of the rotation of the duct (24₁), by pull-off springs (43) to co-operate, through longitudinal openings (39) provided for in the duct (24₁) with carrying rollers (18) integral with a driving spindle (38) for carrying the printed sheets (15).

3.   Computer output peripheral device according to claim 1, characterized in that the cam (45) is comprised of a superposition of two cams (51) and (52), the cam (52) being provided, on its periphery, with flattenings (56) and a roller (57) and the cam (51) being provided with a groove (54) co-operating with the roller (57) of the cam (52).

## Ansprüche

1.   Peripherie-Einrichtung für Computerausgang zur Behandlung von elektronischen Datenverarbeitungsunterlagen, umfassend einen Drucker (2), der mit kontinuierlichem Papier (4) gespeist wird, das von einem Nockenradantrieb angetrieben wird un am Druckerkopf (10) des genannten Druckers (2) vorbeikommt, Zellen (14) zur opti-schen Abtastung der an den Rändern (13) des Papiers (4) erscheinenden Symbole, wobei die Zellen in Eingang mit einer elektronischen Interface verbunden und direkt zwischen dem Ausgang des Druckers (2) und einer Ränderbeschneidungsvorrichtung (5), die, einerseits, die Ränder (13) beschneidet und, andererseits, das Papier (4) in Querrichtung zu einer Reihe Druckbögen (15) beschneidet, angeordnet sind, einen Abtasttisch (6), der es erlaubt, die verschiedenen Druckbögen (15) zu einer Reihe von Sortierelementen, die von der elektronischen Interface gesteuerte Antriebmittel (25) aufweisen, zu führen, dadurch gekennzeichnet, daß sie eine Umkehrstation (9) umfaßt, die von der elektronischen Interface gesteuerte Antriebmittel aufweist, die aus einem Schrittmotor besteht, der die Drehung eines Schlauches ($24_1$) um eine senkrechte Spindel (30) sichert, welche über einen Nocken (45) in Umdrehungsfraktionen um Winkel, die je nach der an den Rändern (13) der Druckbögen (15) von den optischen Abtastzellen (14) äbgetasteten Adressen von der elektronischen Interface bestimmt werden, betätigt wird.

2.   Peripherie-Einrichtung für Computerausgang nach Anspruch 1, dadurch gekennzeichnet, daß die Umkehr- und/oder Lenkstation (9) für die Druckbögen (15) lose Rollen (40) umfaßt, die einziehbar und in Drehung beweglich bezüglich fest mit einer Spindel (42) verbundenen Tragarme (41) sind, um die lose Rollen (40) während der Drehung des Schlauches ($24_1$) nach oben einzuziehen, wobei die genannten, mit den losen Rollen (40) versehenen Tragarme (41) am Ende der Drehung des Schlauches ($24_1$) von Rückstellfedern in die niedrigere Stellung zurückgeführt werden, um durch im Schlauch ($24_1$) vorgesehene Längsöffnungen (39) mit den mit einer Antriebspindel (38) fest verbundenen Antriebrollen (18), zwecks des Antriebs der Druckbögen (15), zusammenzuarbeiten.

3.   Peripherie-Einrichtung für Computerausgang nach Anspruch 1, dadurch gekennzeichnet, daß der Nocken (15) aus einer Aufeinanderlegung von zwei Nocken (51) und (52) besteht, wobei der Nocken (52) an dessen Umkreis mit Abflachungen (56) und einer Rolle (57) und der Nocken (51) mit einer Nute (54), die mit der Rolle (57) des Nockens (52) zusammenarbeitet, versehen sind.

# FIG. 1

EP 0 210 117 B1

# FIG. 2

# FIG. 3

# FIG. 4

EP 0 210 117 B1